# EUROPÄISCHE PATENTSCHRIFT

(11) **EP 0 945 194 B1**
(45) Veröffentlichungstag und Bekanntmachung des Hinweises auf die Patenterteilung: **29.04.2009**
(21) Anmeldenummer: 99105337.2
(22) Anmeldetag: 16.03.1999
(51) Int. Cl.: B21D 28/12, B21D 28/04, B23Q 1/01, B23Q 1/62, B23Q 3/00, B21D 28/26

(54) **Maschine zum Bearbeiten von plattenartigen Werkstücken, insbesondere von Blechen**
Machine for working plat-like members, in particular metal sheets
Machine pour travailler des éléments en forme de plaques en particulier des tôles

(30) Priorität: 21.03.1998 DE 29805195 U
(43) Veröffentlichungstag der Anmeldung: 29.09.1999
(73) Patentinhaber: TRUMPF Werkzeugmaschinen GmbH + Co. KG, 71254 Ditzingen (DE)
(72) Erfinder: Erlenmaier, Werner Dipl.-Ing., 70839 Gerlingen (DE); Bundschu, Stephan Dipl.-Ing., 70469 Stuttgart (DE); Laib, Wolfgang Dipl.-Ing.(BA), 74354 Besigheim (DE)
(74) Vertreter: Kohler Schmid Möbus

(56) Entgegenhaltungen:
- US-A- 3 717 061
- US-A- 4 144 783
- US-A- 5 778 749

## Beschreibung

Die Erfindung betrifft eine Maschine zum Bearbeiten von plattenartigen Werkstücken, insbesondere von Blechen, mit einem Maschinenrahmen, an welchem ein Werkstücktisch sowie wenigstens eine Bearbeitungsstation angebracht sind, sowie mit einer Koordinatenführung, mittels derer das Werkstück parallel zu der Werkstücktischebene in zwei quer zueinander verlaufenden Koordinatenrichtungen gegenüber dem Maschinenrahmen über den Werkstücktisch verschiebbar ist, wobei eine Führungsschiene der Koordinatenführung an dem Maschinenrahmen in der einen Koordinatenrichtung gegenüber diesem verschiebbar gelagert ist, wenigstens einen Werkstückhalter in der anderen Koordinatenrichtung ihr gegenüber verschiebbar führt und in der letztgenannten Richtung an wenigstens einer Seite des Werkstücktisches mit einem Überstand gegenüber dem Werkstücktisch vorsteht und wobei an dem Überstand der Führungsschiene eine mit dem Werkstücktisch eine Werkstückauflage bildende und mit der Führungsschiene gegenüber dem Maschinenrahmen verschiebbare Werkstückabstützung und zwischen dem Überstand der Führungsschiene und dem Maschinenrahmen ein mit der Führungsschiene gegenüber dem Maschinenrahmen verschiebbares Versteifungselement vorgesehen ist, über welches sich die Führungsschiene an dem Maschinenrahmen gegen Verformung bzw. Verlagerung wenigstens in einer parallel zu der Werkstücktischebene verlaufenden Ebene abstützt

Die Druckschrift US-A-4,144,783 offenbart eine Maschine zum Bearbeiten von plattenartigen Werkstücken, die als Werkstückauflage Seitentische aufweist, die ihrerseits an Lagerelementen befestigt sind. Im Übrigen kragen die Seitentische gegenüber einer Führungsschiene zur Führung eines Werkstückhalters sowie gegenüber einem Maschinenrahmen frei vor. Nicht offenbart ist eine Verbindung zwischen den Seitentischen einerseits und der Führungsschiene andererseits.

Aus der Druckschrift DE-A-22 64 852 sowie aus der inhaltlich damit übereinstimmenden Druckschrift US-A-3,717,061 ist eine Revolverstanzpresse bekannt, im Falle derer an einem Maschinengrundrahmen mit Werkstücktisch eine Führungsschiene für einen das zu bearbeitende Werkstück halternden Querschlitten parallel zu der Werkstücktischebene in einer Koordinatenrichtung verschiebbar gelagert ist. Der Querschlitten ist dabei an der Führungsschiene in deren Längsrichtung und somit quer zu der Richtung der Verschiebung der Führungsschiene gegenüber dem Maschinengrundrahmen verschiebbar geführt. Führungsschiene und Querschlitten bilden die Koordinatenführung der vorbekannten Maschine. In ihrer Längsrichtung steht die Führungsschiene beidseitig über den Werkstücktisch des Maschinengrundrahmens vor. Der feststehende Werkstücktisch an dem Maschinengrundrahmen bildet gemeinsam mit zwei an den Überständen der Führungsschiene angebrachten und mit der Führungsschiene verschiebbaren Seitentischen die Werkstückauflage. Der Führung und Abstützung der Seitentische an dem Maschinengrundrahmen dienen Führungsschlitten, die ebenfalls an der Führungsschiene angebracht sind und mit entsprechenden Führungseinrichtungen an dem Maschinengrundrahmen zusammenwirken. In ihrem mittleren Teil sind die Seitentische zusätzlich durch jeweils zwei gelenkig miteinander verbundene Stützarme abgestützt, von denen der eine mit seinem von der gemeinsamen Gelenkverbindung abliegenden Ende an dem Maschinenrahmen und der andere in der Mitte des betreffenden Seitentischs drehgelagert ist. Der an der Führungsschiene in deren Längsrichtung verschiebbare Querschlitten ist mit Spannvorrichtungen zur klemmenden Befestigung des zu bearbeitenden Bleches versehen.

Beim praktischen Einsatz von Maschinen der aus der DE-A-22 64 852/US-A-3,717,061 bekannten Art hatten sich nachteiligerweise unerwünschte Verformungen bzw. Verlagerungen der Führungsschiene eingestellt. Diese Erscheinungen waren insbesondere das Ergebnis der Trägheit der bei Maschinenbetrieb mit der Führungsschiene zu beschleunigenden Massen, beispielsweise des an der Führungsschiene gelagerten Querschlittens, des an der Führungsschiene über den Querschlitten gehaltenen Werkstücks und/oder der an der Führungsschiene befestigten Seitentische einschließlich der Elemente zur Führung und Abstützung der Seitentische an dem Maschinengrundrahmen.

Zur Vermeidung der beschriebenen unerwünschten Verformungen bzw. Verlagerungen der Führungsschiene werden derzeit Maschinen mit den eingangs angegebenen gattungsbildenden Merkmalen eingesetzt. Zur Versteifung der Koordinatenführung sind gattungsgemäße Maschinen in Weiterbildung der Maschinen der aus der DE-A-22 64 852/US-A-3,717,061 bekannten Art mit Versteifungselementen versehen, mittels derer sich die Führungsschiene an dem Maschinenrahmen gegen Verformung bzw. Verlagerung wenigstens in einer parallel zu der Werkstücktischebene verlaufenden Ebene abstützt. Als Versteifungselemente kommen dabei zwischen den Überständen der Führungsschiene und dem Maschinenrahmen verlaufende und gemeinsam mit der Führungsschiene bewegte Streben zum Einsatz. Die Verwendung derartiger Streben aber führt zu einer weiteren Vergrößerung der gemeinsam mit der Führungsschiene zu beschleunigenden und an dem Maschinenrahmen abzustützenden Masse. Dies wiederum verlangt eine entsprechende Auslegung des Maschinenrahmens hinsichtlich seiner Tragfähigkeit. Alles in allem ist an derzeit gebräuchlichen Maschinen die erforderliche Versteifung der Koordinatenführung verbunden mit einer verhältnismäßig großen Masse bzw. mit einem verhältnismäßig hohen Gewicht der Koordinatenführung und damit der gesamten Maschine.

In dieser Hinsicht eine Verbesserung zu ermöglichen, hat sich die vorliegende Erfindung zum Ziel gesetzt.

Erfindungsgemäß gelöst wird die genannte Aufgabe dadurch, daß an einer Maschine der eingangs genannten Art als Versteifungselement eine eigensteife Platte vorgesehen ist, die an einer Plattenoberfläche die verschiebbare Werkstückabstützung bildet und die als Hohlkammerplatte ausgebildet ist mit einer inneren Wabenstruktur, die ihrerseits in Querrichtung der Plattenebene verlaufende Wabenwandungen aufweist. An erfindungsgemäßen Maschinen übernimmt die eigensteife Platte eine Doppelfunktion. Zum einen dient sie zur Versteifung der Koordinatenführung, insbesondere als Momentenstütze für die Führungsschiene; zum anderen übernimmt sie die Funktion eines bei entsprechender Dimension des zu bearbeitenden Werkstückes unverzichtbaren, den Werkstücktisch des Maschinenrahmens ergänzenden Werkstückauflagers. Von der Verwendung eines separaten, ausschließlich zur Versteifung der Koordinatenführung dienenden und notwendigerweise massebehafteten Bauteiles kann im Sinne der Erfindung abgesehen werden. Die Verwendung einer Hohlkammerplatte als werkstückabstützung bringt gegenüber herkömmlichen, zusätzlich zu dem Werkstücktisch des Maschinenrahmens verwendeten Seitentischen eine erhebliche Gewichtsersparnis mit sich. Im Interesse einer maximalen Eigensteifigkeit bei minimaler Masse bzw. minimalem Gewicht ist vorgesehen, daß die eigensteife Platte eine innere Wabenstruktur mit in Querrichtung der Plattenebene verlaufenden Wabenwandungen aufweist.

In Weiterbildung der Erfindung ist die eigensteife Platte über ein Stützlager an dem Maschinenrahmen gegenüber diesem mit der Führungsschiene verschiebbar abgestützt. Quer zu der Verschieberichtung ist die mittels des Stützlagers realisierte Abstützung weitestgehend spielfrei.

Eine weitere Ausgestaltung der Erfindung betrifft eine gattungsgemäße Maschine, deren Führungsschiene an beiden Seiten des Werkstücktisches mit jeweils einem Überstand gegenüber dem Werkstücktisch vorsteht, wobei an jedem der Überstände der Führungsschiene eine mit dem Werkstücktisch eine Werkstückauflage bildende WerkstilCka.bstützung sowie zwischen jedem der Überstände der Führungschiene und dem Maschinenrahmen ein Versteifungselement vorgesehen ist. In Weiterbildung der Erfindung sind an einer derartigen Maschine beide Versteifungselemente im Interesse einer Minimierung der mit der Führungsschiene zu bewegenden Masse jeweils als eigensteife und an einer Plattenoberfläche die jeweilige verschiebbare Werkstückabstützung bildende Platte ausgebildet.

Nachstehend wird die Erfindung anhand schematischer Darstellungen zu einem Ausführungsbeispiel näher erläutert. Es zeigen:
- Fig. 1: eine teilweise Seitenansicht einer Stanzmaschine mit eigensteifen Platten zur Versteifung der Koordinatenführung der Maschine,
- Fig. 2: die Stanzmaschine nach Figur 1 in der Draufsicht auf das Maschinenunterteil,
- Fig. 3: eine der eigensteifen Platten nach den Figuren 1 und 2 im Querschnitt und
- Fig. 4: die eigensteife Platte nach Figur 3 in der teilgeschnittenen Draufsicht.

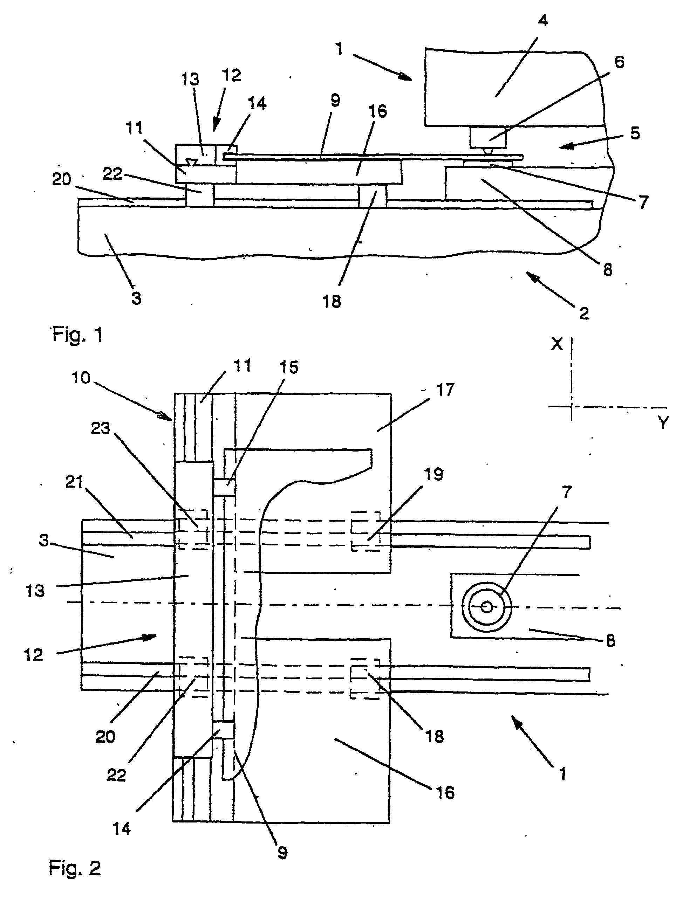

Ausweislich Figur 1 umfaßt eine Stanzmaschine 1 einen Maschinenrahmen 2 mit einem Maschinenunterteil 3 sowie einem von letzterem in vertikaler Richtung beabstandeten Maschinenoberteil 4. In dem Rachenraum zwischen dem Maschinenunterteil 3 sowie dem Maschinenoberteil 4 ist eine Bearbeitungsstation in Form einer herkömmlichen Stanzstation 5 mit einem Stanzwerkzeugoberteil 6 und einem Stanzwerkzeugunterteil 7 untergebracht. Das Stanzwerkzeugunterteil 7, vorliegend die Stanzmatrize, ist an einem mit dem Maschinenunterteil 3 fest verbundenen Werkstücktisch 8 gelagert.

Die Stanzstation 5 dient zur Bearbeitung eines Bleches 9, das mittels einer Koordinatenführung 10 parallel zu der Werkstücktischebene in zwei quer zueinander verlaufenden Koordinatenrichtungen x, y (Figur 2) gegenüber dem Maschinenrahmen 2 über den Werkstücktisch 8 verschoben und dadurch in seine Bearbeitungsposition gegenüber der Stanzstation 5 überführt werden kann.

Die Koordinatenführung 10 umfaßt eine Führungsschiene 11, die sich in der Koordinatenrichtung x erstreckt und an dem ortsfesten Maschinenrahmen 2 bzw. dem ortsfesten Maschinenunterteil 3 in der Koordinatenrichtung y verschiebbar geführt ist. Die Führungsschiene 11 lagert einen Werkstückhalter 12 in Form eines Querschlittens 13 mit Spannpratzen 14, 15. Dabei ist der Werkstückhalter 12 in der Koordinatenrichtung x gegenüber der Führungsschiene 11 verschiebbar. Mittels der Spannpratzen 14, 15 wird das Blech 9 klemmend gehalten. Zur Bewegung der Führungsschiene 11 sowie des Werkstückhalters 12 dienen herkömmliche, über die Maschinensteuerung gesteuerte motorische Antriebe.

Die Abstützung des Bleches 9 in Schwerkraftrichtung erfolgt zum einen mittels des Werkstücktisches 8, der das Blech 9 über das Stanzwerkzeugunterteil 7 und bei entsprechender Abmessung und damit verbundener Durchbiegung des Bleches 9 von dem Stanzwerkzeugteil 7 nach unten auch unmittelbar lagert. Den Werkstücktisch 8 in seiner Funktion als Werkstückabstützung ergänzen eigensteife Platten 16, 17.

Die eigensteifen Platten 16, 17 sind jeweils mit einem Rand an Überständen der Führungsschiene 11 gegenüber dem Werkstücktisch 8 befestigt. An einer von der Führungsschiene 11 gegenüber dem Werkstücktisch 8 abliegenden Ecke sind die eigensteifen Platten 16, 17 jeweils mit einer ein Stützlager für die eigensteifen Platten 16, 17 bildenden Längsführung 18, 19 verbunden, die ihrerseits mit in der Koordinatenrichtung y verlaufenden Längsschienen 20, 21 an dem Maschinenunterteil 3 im Eingriff sind. Der Eingriff der Längsführungen 18, 19 an den Längsschienen 20, 21 ist konstruktiv derart gestaltet, daß sich die Längsführungen 18, 19 einzig und allein in der Koordinatenrichtung y bewegen können und eine quer dazu gerichtete Bewegung in der Koordinatenrichtung x sowie Kippbewegungen um die Koordinatenachsen weitestgehend ausgeschlossen sind. Alles in allem ergibt sich über die eigensteifen Platten 16, 17 eine Abstützung der Führungsschiene 11 an dem Maschinenrahmen 2, durch welche unerwünschte Verformungen und Verlagerungen der Führungsschiene 11 insbesondere in der durch die Koordinatenrichtungen x, y definierten Ebene verhindert werden. An den das Blech 9 untergreifenden Plattenoberflächen der eigensteifen Platten 16, 17 sowie an der Oberseite des Werkstücktisches 8 können das Blech 9 abstützende Borsten oder Kugeln üblicher Bauart vorgesehen sein, die dazu dienen, die bei der Bewegung des Bleches 9 mittels des Werkstückhalters 12 relativ zu den eigensteifen Platten 16, 17 sowie dem Werkstücktisch 8 zwischen den Plattenoberflächen und der Oberfläche des Werkstücktisches 8 einerseits und der Blechunterseite andererseits auftretende Reibung zu vermindern. In den Figuren 1 und 2 der Vollständigkeit halber dargestellt sind Längsführungen 22, 23, mittels derer die Führungsschiene 11 an den Längsschienen 20, 21 des Maschinenunterteils 3 in der Koordinatenrichtung y verschiebbar gelagert ist und von denen die Führungsschiene 11 mit ihren Überständen gegenüber dem Werkstücktisch 8 vorkragt. Quer zu der Koordinatenrichtung y ist diese Lagerung weitestgehend spielfrei.

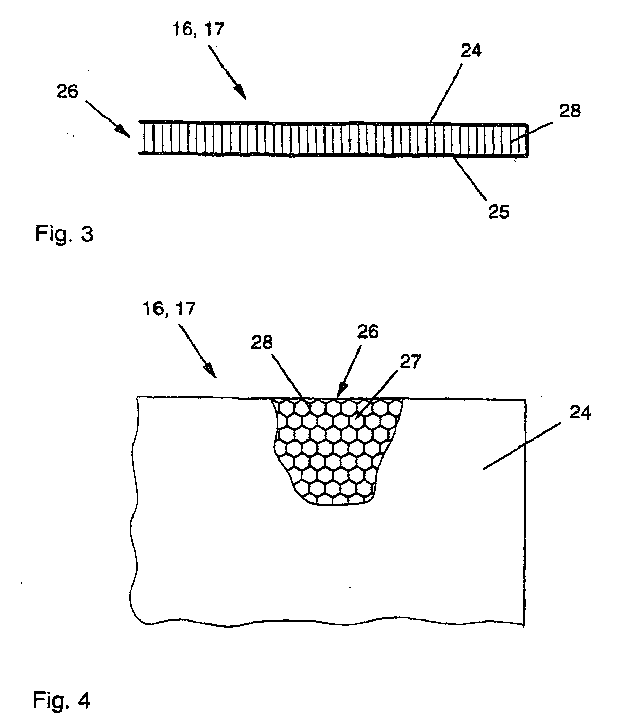

Wie den Figuren 3 und 4 zu entnehmen ist, handelt es sich bei den eigensteifen Platten 16, 17 um Hohlkammerplatten mit einem oberen Deckblech 24, einem unteren Deckblech 25 sowie einer inneren Wabenstruktur 26. Die innere Wabenstruktur 26 wird gebildet von Wabenzellen 27 begrenzenden und in Querrichtung der Plattenebene verlaufenden Wabenwandungen 28. Sowohl das obere Deckblech 24 als auch das untere Deckblech 25 und die Wabenwandungen 28 bestehen aus Aluminium. Aufgrund des gewählten Aufbaus vereinen die eigensteifen Platten 16, 17 minimales Eigengewicht mit maximaler Eigensteifigkeit. Dabei sind die eigensteifen Platten 16, 17 in der Lage, sowohl in der Plattenebene als auch quer dazu wirkende Kräfte nahezu verformungsfrei zu übertragen. Aufgrund der Eigensteifigkeit in Querrichtung der Plattenebene lassen sich die eigensteifen Platten 16, 17 in Schwerkraftrichtung auch über lediglich wenige Lagerstellen an dem Maschinenrahmen 2 abstützen. Wie aus Figur 2 hervorgeht, kann auf die eigensteifen Platten 16, 17 an ihren den Längsführungen 18, 19 in der Koordinatenrichtung x gegenüberliegenden Ecken untergreifende Auflager verzichtet werden.

## Patentansprüche

1. Maschine zum Bearbeiten von plattenartigen Werkstücken, insbesondere von Blechen (9), mit einem Maschinenrahmen (2), an welchem ein Werkstücktisch (8) sowie wenigstens eine Bearbeitungsstation (5) angebracht sind, sowie mit einer Koordinatenführung (10), mittels derer das Werkstück parallel zu der Werkstücktischebene in zwei quer zueinander verlaufenden Koordinatenrichtungen (x, y) gegenüber dem Maschinenrahmen (2) über den Werkstücktisch (8) verschiebbar ist,wobei eine Führungsschiene (11) der Koordinatenführung (10) an dem Maschinenrahmen (2) in der einen Koordinatenrichtung (y) gegenüber diesem verschiebbar gelagert ist, wenigstens einen Werkstückhalter (12) in der anderen Koordinatenrichtung (x) ihr gegenüber verschiebbar führt und in der letztgenannten Richtung (x) an wenigstens einer Seite des Wexketücktisches (8) mit einem Überstand gegenüber dem Werkstücktisch (8) vorsteht und wobei an dem Überstand der Führungsschiene (11) eine mit dem Werkstücktisch (8) eine Werkstückauflage bildende und mit der Führungsschiene (11) gegenüber dem Maschinenrahmen (2) verschiebbare Werkstückabstützung und zwischen dem Überstand der Führungsschiene (11) und dem Maschinenrahmen (2) ein mit der Führungsschiene (11) gegenüber dem Maschinenrahmen (2) verschiebbares Versteifungselement vorgesehen ist, über welches sich die Führungsschiene (11) an dem Maschinenrahmen (2) gegen Verformung bzw. Verlagerung wenigstens in einer parallel zu der Werkstücktischebene verlaufenden Ebene abstützt, **dadurch gekennzeichnet, daß** als Versteifungselement eine eigensteife Platte (16, 17) vorgesehen ist, die an einer Plattenoberfläche die verschiebbare Werkstückabstützung bildet und die als Hohlkammerplatte ausgebildet ist mit einer inneren Wabenstruktur (26), die ihrerseits in Querrichtung der Plattenebene verlaufende Wabenwandungen (28) aufweist.

2. Maschine nach Anspruch 1, **dadurch gekennzeichnet, daß** die eigensteife Platte (16, 17) über ein Stützlager (18, 19) an dem Maschinenrahmen (2) gegenüber diesem mit der Führungsschiene (11) verschiebbar abgestützt ist.

3. Maschine nach einem der vorhergehenden Ansprüche, wobei die Führungsschiene (11) an beiden Seiten des Werkstücktisches (8) mit jeweils einem Überstand gegenüber dem Werkstücktisch (8) vorsteht, wobei an jedem der Überstände der Führungsschiene (11) eine mit dem Werkstücktisch (8) eine Werkstückauflage bildende verschiebbare Werkstückabstützung sowie zwischen jedem der Überstände der Führungsschiene (11) und dem Maschinenrahmen (2) ein Versteifungselement vorgesehen ist, **dadurch gekennzeichnet, daß** beide Versteifungselemente jeweils als eigensteife und an einer Plattenoberfläche die jeweilige verschiebbare Werkstückabstützung bildende Platte (16, 17) ausgebildet sind.

## Claims

1. Machine for processing plate-like workpieces, in particular metal sheets (9), having a machine frame (2), to which a workpiece table (8) and at least one processing station (5) are fitted, and having a coordinate guide (10), by means of which the workpiece can be displaced with respect to the machine frame (2) over the workpiece table (8) parallel with the workpiece table plane in two coordinate directions (x, y), which extend transversely relative to each other, with a guide rail (11) of the coordinate guide (10) being supported on the machine frame (2) so as to be displaceable relative thereto in one coordinate direction (y), displaceably guiding at least one workpiece holder (12) in the other coordinate direction (x) relative thereto and projecting, in the coordinate direction (x), at least at one side of the workpiece table (8) with a projection relative to the workpiece table (8), and there being provided, on the projection of the guide rail (11), a workpiece support, which forms a workpiece base with the workpiece table (8) and which can be displaced with the guide rail (11) relative to the machine frame (2), and, between the projection of the guide rail (11) and the machine frame (2), a stiffening element which can be displaced with the guide rail (11) relative to the machine frame (2) and by means of which the guide rail (11) is supported on the machine frame (2) against deformation or displacement at least in one plane which extends parallel with the workpiece table plane, **characterised in that** an inherently rigid plate (16, 17) is provided as a stiffening element and forms the displaceable workpiece support at one plate surface and is in the form of a hollow chamber plate with an inner honeycomb structure (26) which itself has honeycomb walls (28) which extend in the transverse direction of the plate plane.

2. Machine according to claim 1, **characterised in that** the inherently rigid plate (16, 17) is supported by means of a support bearing (18, 19) on the machine frame (2) so as to be displaceable relative thereto with the guide rail (11).

3. Machine according to either of the preceding claims, wherein the guide rail (11) projects at each of the two sides of the workpiece table (8) with a projection relative to the workpiece table (8), a displaceable workpiece support which forms a workpiece base with the workpiece table (8) being provided on each of the projections of the guide rail (11) and a stiffening element being provided between each of the projections of the guide rail (11) and the machine frame (2), **characterised in that** each of the two stiffening elements is formed as an inherently rigid plate (16, 17) which forms the respective displaceable workpiece support on a plate surface.

## Revendications

1. Machine pour usiner des pièces du genre plaques, en particulier des tôles (9), avec un bâti de machine (2) sur lequel sont installés une table porte-pièce (8) et au moins un poste d'usinage (5), et avec un guidage (10) par coordonnées cartésiennes au moyen duquel la pièce peut être déplacée par rapport au bâti de machine (2) sur la table porte-pièce (8), parallèlement au plan de la table, dans deux directions de coordonnées (x, y) perpendiculaires entre elles, sachant qu'un rail de guidage (11) du guidage (10) par coordonnées cartésiennes est monté sur le bâti de machine (2) en pouvant être déplacé par rapport à ce dernier dans l'une (y) des directions de coordonnées, qu'il guide en déplacement par rapport à lui dans l'autre direction de coordonnées (x) au moins un support de pièce (12) et que, dans cette dernière direction (x), il dépasse de la table porte-pièce (8) sur au moins un côté de celle-ci par une partie dépassante, et sachant qu'un appui de pièce est prévu sur la partie dépassante du rail de guidage (11), appui qui forme une surface d'appui de pièce avec la table porte-pièce (8) et qui peut être déplacé avec le rail de guidage (11) par rapport au bâti de machine (2), et qu'un élément de renforcement est prévu entre la partie dépassante du rail de guidage (11) et le bâti de machine (2), élément qui peut être déplacé avec le rail de guidage (11) par rapport au bâti de machine (2) et au moyen duquel le rail de guidage (11) s'appuie sur le bâti de machine (2) afin d'éviter sa déformation ou encore son décalage au moins dans un plan s'étendant parallèlement au plan de la table porte-pièce,
**caractérisée en ce qu'**une plaque à rigidité propre (16, 17) est prévue comme élément de renforcement, qui forme sur une surface de plaque l'appui mobile de pièce et est réalisée sous forme de plaque creuse avec une structure intérieure alvéolaire (26), qui présente elle-même des parois d'alvéoles (28) s'étendant dans la direction transversale du plan de la plaque.

2. Machine selon la revendication 1, **caractérisée en ce que** la plaque à rigidité propre (16, 17) s'appuie sur le bâti de machine (2) au moyen d'un palier d'appui (18, 19), en pouvant être déplacée avec le rail de guidage (11) par rapport audit bâti.

3. Machine selon l'une des revendications précédentes, sachant que le rail de guidage (11) dépasse de la table porte-pièce (8) des deux côtés de celle-ci par une partie dépassante respective, sachant qu'un appui mobile de pièce, formant avec la table porte-pièce (8) une surface d'appui de pièce, est prévu sur chacune des parties dépassantes du rail de guidage (11), et qu'un élément de renforcement est prévu entre chacune des parties dépassantes du rail de guidage (11) et le bâti de machine (2),
**caractérisée en ce que** les deux éléments de renforcement sont chacun réalisés sous la forme d'une plaque à rigidité propre (16, 17), qui forme sur une surface de plaque l'appui mobile de pièce respectif.
